# EUROPÄISCHE PATENTSCHRIFT

(11) **EP 0 974 806 B1**
(45) Veröffentlichungstag und Bekanntmachung des Hinweises auf die Patenterteilung: **19.05.2004**
(21) Anmeldenummer: 99111951.2
(22) Anmeldetag: 23.06.1999
(51) Int. Cl.: F41G 7/00, G05B 13/02

(54) **Verfahren zum Trainieren eines neuronalen Netzes für die Lenkung eines Flugkörpers zu einem Ziel**
Method for training a neural network for guiding a missile towards a target
Procédé pour entrainer un réseau neuronal utilisé pour guider un missile vers une cible

(30) Priorität: 21.07.1998 DE 19832612
(43) Veröffentlichungstag der Anmeldung: 26.01.2000
(73) Patentinhaber: Bodenseewerk Gerätetechnik GmbH, 88662 Überlingen (DE)
(72) Erfinder: Krogmann, Uwe, Dr., 88662 Überlingen (DE)
(74) Vertreter: Weisse, Jürgen, Dipl.-Phys.

(56) Entgegenhaltungen:
- EP-A- 0 531 712
- EP-A- 0 654 776
- DE-A- 4 218 600
- DE-A- 19 645 556
- US-A- 5 259 064

## Beschreibung

Die Erfindung betrifft ein Verfahren zum Trainieren eines neuronalen Netzes für die Lenkung eines Flugkörpers zu einem Ziel.

Zielverfolgende Flugkörper weisen einen Suchkopf auf, der eine Objektszene mit dem zu verfolgenden Ziel erfaßt. Der Suchkopf und eine dem Suchkopf nachgeschaltete Signalverarbeitung liefern Lenksignale. Die Lenksignale bewirken eine Verstellung von Steuerflächen des Flugkörpers und dadurch einen Anstellwinkel und eine Querbeschleunigung derart, daß der Flugkörper auf einem Kollisionskurs zu dem Ziel geführt wird. Bei bekannten Flugkörpern dieser Art erfolgt eine Lenkung des Flugkörpers nach dem Lenkgesetz der "Proportionalnavigation". Dabei wird die Drehrate der Sichtlinie vom Flugkörper zum Ziel im inertialen Raum bestimmt und die Querbeschleunigung proportional zu dieser Drehrate gemacht.

Wenn das Ziel hoch-manövrierfähig ist, z.B. ein hoch-manövrierfähiges Kampfflugzeug, dann ist eine "schematische" Lenkung nach dem Lenkgesetz der Proportionalnavigation nicht mehr ausreichend. Die erforderlichen Lenkgesetze werden hochgradig nichtlinear, wenn alle auftretenden Situationen berücksichtigt werden sollen.

Die DE 196 45 556 A1 offenbart eine Vorrichtung zur Erzeugung von Lenksignalen für zielverfolgende Flugkörper. Der Flugkörper weist einen Suchkopf auf, der ein Bild eines das Ziel enthaltenden Gesichtsfeldes erfaßt. Bildverarbeitungsmittel erzeugen daraus Meßgrößen, welche die Bewegung des Ziels relativ zu dem Flugkörper wiedergeben. Aus diesen Meßgrößen werden Lenksignale erzeugt. Außerdem ist ein Trägheits-Referenzsystem vorgesehen, das auf Bewegungen des Flugkörpers im inertialen Raum anspricht. Nach der Lehre der DE 196 45 556 A1 werden die Lenksignale von einer trainierten, wissensbasierten Signalverarbeitungs-Einheit erzeugt. Auf diese Signalverarbeitungs-Einheit sind als weitere Eingänge Meßgrößen aufgeschaltet, die den Bewegungszustand des Flugkörpers wiedergeben und aus Meßgrößen des Trägheitsreferenzsystems abgeleitet sind. Die Signalverarbeitungs-Einheit ist zur Erzeugung optimaler Lenksignale unter Berücksichtigung der Bewegungen des Ziels und der Flugzustände des Flugkörpers selbst trainiert.

Die EP 0 654 776 A2 betrifft ein Piloten-Trainingsgerät. Es gilt, das Verhalten eines zu trainierenden Piloten im Vergleich zu einem "guten Piloten" als Referenz. Es besteht das Problem, wie man einen solchen Vergleich durchführen kann. Natürlich werden nicht alle Piloten auf die gleichen Eingaben (wie Instrumentenanzeigen oder Landschaftsbilder) genau gleich reagieren. Es werden Abweichungen auftreten, aber es ist schwierig, diese Abweichungen zu bewerten.

### Die EP 0 654 776 A2 gewinnt eine Bewertung auf folgende Weise:

Das Verhalten des Referenzpiloten trainiert ein neuronales Netz. Eingänge dieses neuronalen Netzes sind Situationen, die z.B. durch Instrumentenanzeigen dargestellt sind. Das neuronale Netz liefert Ausgänge, die den Reaktionen des Piloten entsprechen. Die Gewichte des neuronalen Netzes werden bei dem Training so lange verändert, bis die bei bestimmten Eingängen am neuronalen Netz erhaltenen Ausgänge den realen Reaktionen des Referenzpiloten entsprechen. Das übliche Verhalten des Referenzpiloten wird so durch Gewichte des neuronalen Netzes "abgebildet".

Es erfolgt nun ein Neutrainieren des neuronalen Netzes durch den zu trainieren Piloten. Das neuronale Netz wird entsprechend dem Verhalten des zu trainierenden Piloten umtrainiert. Es entstehen in dem neuronalen Netz veränderte Gewichte. Aus diesen veränderten Gewichten können Schlüsse darauf gezogen werden, in welcher Weise das generelle Verhalten des zu trainierenden Piloten von dem des Referenzpiloten abweicht, und zwar unabhängig von einzelnen, kurzfristig unterschiedlichen Reaktionen.

Der Erfindung liegt die Aufgabe zugrunde, eine verbesserte Lenkung für zielverfolgende Flugkörper zu schaffen.

Erfindungsgemäß wird diese Aufgabe gelöst durch ein Verfahren zum Trainieren eines neuronalen Netzes für die Lenkung eines Flugkörpers zu einem Ziel mit den Verfahrensschritten:
(a) Darstellung eines Szenarios von Flugkörper und Ziel.
(b) Transformation dieses Szenarios in Zeitlupe,
(c) Simulieren des Fluges des Flugkörpers zu dem Ziel in der Zeitlupe, wobei ein menschlicher Pilot den Flugkörper zu dem Ziel lenkt,
(d) Speichern des Verhaltens des Piloten und des daraus resultierenden Verhaltens des Flugkörpers für eine Anzahl solcher simulierter Flüge,
(e) Rücktransformieren der so gespeicherten Daten in Echtzeit und
(f) Trainieren einer mit dem neuronalen oder fuzzy-neuronalen Netz versehenen Lenkeinheit mit dem in Echtzeit rücktransformierten Verhalten des Piloten und des Flugkörpers.

Ein wesentliches Merkmal der Erfindung besteht darin, den Flugkörper mit einem "virtuellen menschlichen Piloten" in Form eines entsprechend trainierten neuronalen Netzes auszurüsten. Das neuronale Netz reagiert so, wie ein im Flugkörper sitzender menschlicher Pilot reagieren würde. Da der menschliche Pilot nicht so schnell reagieren kann, wie die Vorgänge beim Verfolgen eines Ziels durch den Flugkörper tatsächlich ablaufen, wird die Zielverfolgung zunächst in Zeitlupe simuliert. Das Verhalten des Piloten und des Flugkörpers wird aufgezeichnet, in digitale Daten umgesetzt und gespeichert. Dann erfolgt eine Rücktransformation der in Zeitlupe aufgezeichneten Daten in Echtzeit. Damit ergibt sich für die verschiedensten simulierten Situationen ein Satz von Situationsdaten und Pilotenaktionen: Damit wird ein neuronales oder fuzzy-neuronales Netz trainiert. Das neuronale oder fuzzy-neuronale Netz wird dadurch mit dem Verhalten und den Kenntnissen des Piloten "geklont" und verhält sich dann so wie ein im Flugkörper sitzender menschlicher Pilot.

In weiterer Ausbildung der Erfindung werden vor dem Trainieren des neuronalen oder fuzzy-neuronalen Netzes mit dem Verhalten von Piloten und Flugkörper die folgenden Verfahrensschritte durchgeführt werden: Berechnen einer Lösung des nichtlinearen Lenkproblems in analytischer Form Erzeugen von numerischen Lösungen für eine Anzahl von Flügen des Flugkörpers zu seinem Ziel und Vortrainieren des neuronalen Netzes mit den dabei rechnerisch erhaltenen Lösungen.

Um das neuronale Netz zu programmieren ist eine Vielzahl von simulierten Begegnungssituationen durchzuspielen. Es ist zeitaufwendig, wenn der Pilot die Programmierung in üblicher Weise ausgehend von einem "leeren" neuronalen Netz mit statistisch verteilten Gewichten durchführen muß. Es ist daher vorgesehen, das neuronale Netz vorzutrainieren, indem zunächst die Eingangs- und Ausgangsgrößen des nichtlinearen Lenkproblems für das Trainieren des neuronalen Netzes off-line rechnerisch bestimmt werden. Das geschieht einmal analytisch und zum anderen numerisch. Ei so vortrainiertes neuronales Netz kann dann mit weniger Durchgängen durch den Piloten "feinabgestimmt" werden. Die Gewichte dieses neuronalen Netzes liegen schon ungefähr in den richtigen Bereichen.

Das neuronale oder fuzzy-neuronale Netz nutzt dann zur Lenkung des Flugkörpers nicht nur die Erfahrungen des menschlichen Piloten sondern zusätzlich analytisch oder numerisch gewonnene Kenntnisse über das Verhalten des Flugkörpers

Ein Ausführungsbeispiel der Erfindung ist nachstehend unter Bezugnahme auf die zugehörigen Zeichnungen näher erläutert.
- Fig.1: zeigt als Blockdiagramm die Lenkschleife eines zielverfolgenden Flugkörpers.
- Fig.2: zeigt als Blockdiagramm die Ermittlung von Wissen aus verschiedenen Quellen und das entsprechende "Klonen" eines neuronalen oder fuzzyneuronalen Netzes.
- Fig.3: ist eine schematische Darstellung und zeigt das "Klonen" eines menschlichen Piloten in dem neuronalen oder fuzzy-neuronalen Netz durch Einschalten des menschlichen Piloten in einen Regelkreis mit virtueller Realität.
- Fig.4: ist eine schematische Darstellung und veranschaulicht die Ermittlung von Wissen zum Trainieren des neuronalen oder fuzzy-neuronalen Netzes.

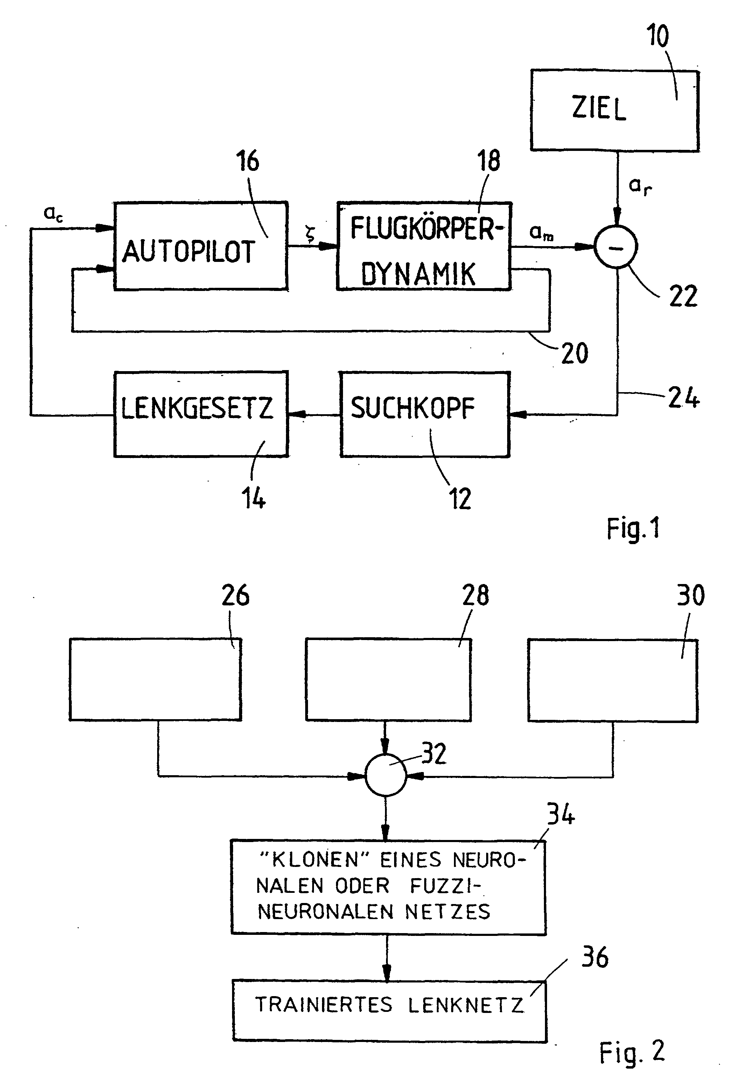

In Fig.1 ist der Lenkregelkreis dargestellt, mittels dessen ein Flugkörper zu einem Ziel geführt wird. Mit 10 ist ein Ziel bezeichnet, z.B. ein hochmanövrierfähiges, feindliches Kampfflugzeug. Das Ziel wird durch einen Suchkopf 12 des Flugkörpers erfaßt. Der Suchkopf liefert Signale, die nach einem Lenkgesetz, das in Fig. 1 durch einen Block 14 dargestellt ist, als kommandierte Querbeschleunigung a_{c} auf einen Autopiloten 16 aufgeschaltet werden. Der Autopilot 16 kommandiert einen Ausschlag ζ einer Steuerfläche. Daraus ergibt sich nach der Flugkörperdynamik, die durch einen Block 18 dargestellt ist, eine Querbeschleunigung am. Mit 20 ist eine Rückführschleife bezeichnet. Mit aᵣ ist die Querbeschleunigung des Ziels 10 bezeichnet. Ein "Summierpunkt" 22 bildet die Differenz, die von dem Suchkopf 12 erfaßt wird. Das ist durch den Pfeil 24 dargestellt.

Das ist die übliche Lenkschleife eines zielverfolgenden Flugkörpers.

Fig.2 veranschaulicht das Trainieren eines neuronalen oder fuzzy-neuronalen Netzes anhand verschiedener Wissens-Quellen. Block 26 symbolisiert die analytische Lösung des nichtlinearen Lenkproblems. Block 28 symbolisiert die numerische Erzeugung optimaler Lösungen im offenen Regelkreis (open-loop) für eine Anzahl von Flügen des Flugkörpers zu dem Ziel. Block 30 symbolisiert die Lenkung mit einem menschlichen Piloten im Regelkreis ("Pilot in the Loop-Guidance"), wie sie weiter unten beschrieben ist. Das so erhaltene Wissen wird zusammengeführt, wie in Fig.2 durch einen "Summierpunkt" 32 symbolisiert ist.

Anhand der auf diese Weise für verschiedene Situationen erhaltenen Lenkdaten wird ein neuronales oder fuzzy-neuronales Netz trainiert. Das ist durch Block 34 dargestellt. Das neuronale oder fuzzy-neuronale Netz wird anhand dieser Daten "geklont". Es umfaßt dann alles aus den verschiedenen Quellen erhaltene Wissen. Durch Block 36 ist das so geklonte neuronale oder fuzzy-neuronale Netz bezeichnet. Dieses neuronale Netz ersetzt die Blöcke 14, "Lenkgesetz" und 16, "Autopilot" von Fig.1.

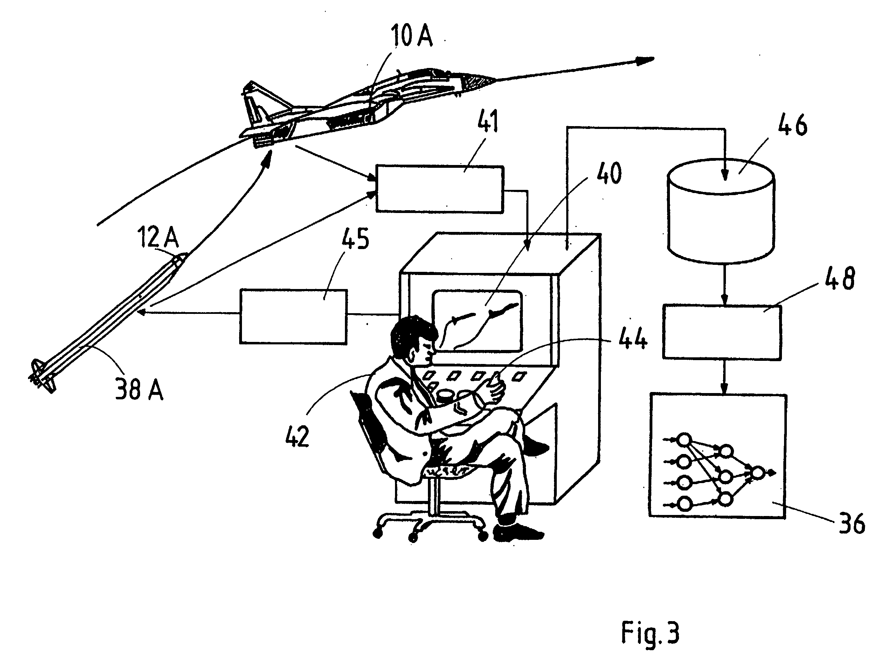

Fig.3 ist eine schematische Darstellung und veranschaulicht die simulierte Lenkung mit einem menschlichen Piloten im Regelkreis und das danach erfolgende Trainieren des neuronalen oder fuzzy-neuronalen Netzes 36.

In Fig.3 ist mit 10A ein virtuelles, d.h. nur in der Simulation existierendes, Ziel in Form eines hoch-manövrierfähigen Kampfflugzeugs bezeichnet. Ein ebenso virtueller zielverfolgender Flugkörper 38A mit einem Suchkopf 12A soll zu dem Ziel 10A geführt werden. Diese in virtueller Realität stattfindende Zielverfolgung wird auf einem Monitor 40 in Zeitlupe mit einer Zeitdehnung um den Faktor λ dargestellt. Wenn t der Zeitmaßstab der virtuellen Realität und τ der Zeitmaßstab der Zeitlupe ist, dann ist τ = λt. Diese Transformation ist in Fig.3 durch Block 41 dargestellt. Ein menschlicher Pilot 42 sieht auf dem Monitor die Zielverfolgung in Zeitlupe ablaufen. Er lenkt dann den virtuellen Flugkörper 38A mittels eines Steuerknüppels 44 zu dem Ziel. Das ist in Fig.3 durch Block 45 dargestellt. Dabei werden Erfahrungen des menschlichen Piloten z.B. über die Flugeigenschaften und das Flugverhalten eines Kampfflugzeugs bei Kurven und Ausweichmanövern mit berücksichtigt. Für den Piloten läuft die Zielverfolgung in Zeitlupe ab. Damit wird dem begrenzten Reaktionsvermögen des menschlichen Piloten Rechnung getragen. Die dabei für verschiedene Situationen von Zielverfolgung erhaltenen Informationen und Daten werden als Funktion der gedehnten Zeit τ aufgezeichnet und als digitale Daten gespeichert. Das ist durch eine Speichertrommel 46 symbolisiert. Es erfolgt jetzt eine Rücktransformation oder Zeitstauchung der so gespeicherten Daten in Echtzeit t nach der Beziehung t = λ⁻¹ τ. Das ist in Fig.3 durch Block 48 dargestellt.

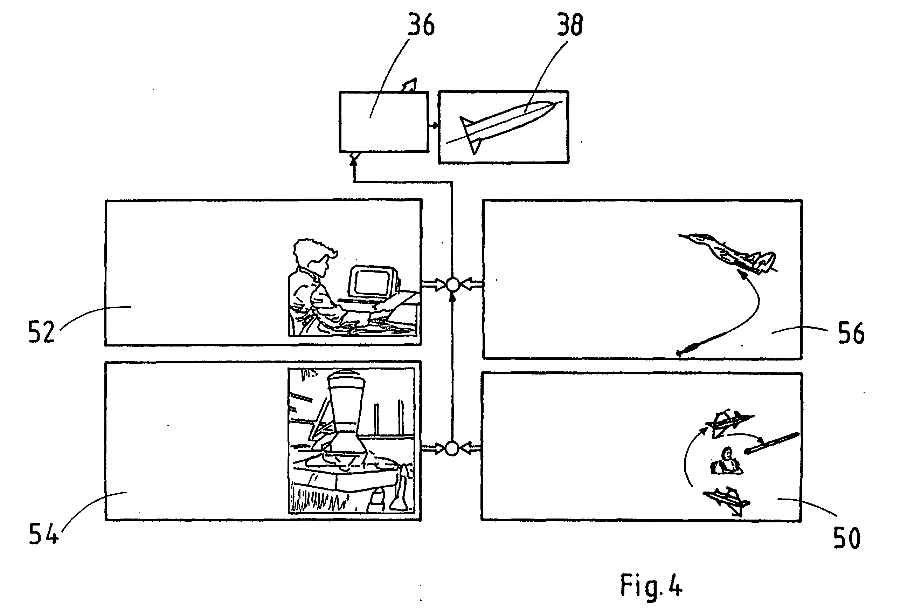

Nach der Zeitstauchung liegen für eine Anzahl von Zielverfolgungs-Situationen die Daten der Aktionen des menschlichen Piloten 42 vor. Mit diesen Daten wird nun das neuronale oder fuzzy-neuronale Netz 36 trainiert. Die Kenntnisse und Erfahrungen des Piloten 42 werden in dem neuronalen Netz 36 "geklont". Dieses neuronale Netz 36 übernimmt dann die Lenkung eines realen Flugkörpers. Das neuronale Netz lenkt in einer bestimmten Zielverfolgungs-Situation den -realen- Flugkörper 38 (Fig.4) so, wie das der menschliche Pilot 42 tun würde, wenn er in dem Flugkörper säße und ihn zu dem Ziel lenken wollte.

In Fig.4 sind das neuronale oder fuzzy-neuronale Netz 36 und der reale Flugkörper 38 dargestellt. Das neuronale oder fuzzy-neuronale Netz 36 wird von einem menschlichen Piloten im Regelkreis nach Art von Fig.3 trainiert. Das ist in Fig.4 durch einen Block 50 dargestellt. Fakultativ kann das neuronale oder fuzzy-neuronale Netz 36 auch noch aus anderen Quellen "lernen". Block 52 symbolisiert Expertenwissen über das Regelverhalten des Flugkörpers etwa im Sinne der Blöcke 26 und 28 von Fig.2. Block 54 symbolisiert Expertenwissen über das Verhalten realer Subsysteme. Block 56 symbolisiert schließlich noch die Möglichkeit des neuronalen oder fuzzy-neuronalen Netzes, während der realen Mission Wissen zu erwerben. Das kann z.B. die Anpassung der Steuerung an die jeweiligen Flugbedingungen und unvorhersehbare Störungen sowie Parameteränderungen sein. Zu diesem während der Mission zu erwerbenden Wissen gehört auch die Fehlererkennung, Fehleridentifikation und Rekonfiguration der Sensoren (FDIR).

Alle diese Quellen für den Lemvorgang des neuronalen oder fuzzy-neuronalen Netzes 36 sind als "Lernsignal" auf das neuronale oder fuzzy-neuronale Netz 36 aufgeschaltet, wie in Fig.4 schematisch angedeutet ist.

## Patentansprüche

1. Verfahren zum Trainieren eines neuronalen Netzes für die Lenkung eines Flugkörpers zu einem Ziel; **gekennzeichnet durch die Verfahrensschritte:**
(a) Darstellung eines Szenarios von Flugkörper (38A) und Ziel (10A) in virtueller Realität,
(b) Transformation dieses Szenarios in Zeitlupe (41),
(c) Simulieren des Fluges des Flugkörpers zu dein Ziel in der Zeitlupe, wobei ein menschlicher Pilot (42) den Flugkörper (38A) zu dem Ziel (10A) lenkt,
(d) Speichern (46) des Verhaltens des Piloten (42) und des daraus resultierenden Verhaltens des Flugkörpers (10A) für eine Anzahl solcher simulierter Flüge,
(e) Rücktransformieren der so gespeicherten Daten in Echtzeit (48) und
(f) Trainieren der mit einem neuronalen oder fuzzy-neuronalen Netz (36) versehenen Lenkeinheit mit dem in Echtzeit rücktransformierten Verhalten des Piloten (42) und des Flugkörpers (10A).

2. Verfahren nach Anspruch 1, **dadurch gekennzeichnet, daß** vor dem Trainieren des neuronalen oder fuzzy-neuronalen Netzes mit dem Verhalten von Piloten und Flugkörper die folgenden Verfahrensschritte durchgeführt werden:
(a) Berechnen einer Lösung des nichtlinearen Lenkproblems in analytischer Form (26) und
(b) Erzeugen von numerischen Lösungen für eine Anzahl von Flügen des Flugkörpers zu seinem Ziel und
(c) Vortrainieren des neuronalen Netzes mit den dabei rechnerisch erhaltenen Lösungen.

## Claims

1. Method of training a neural network for guiding a missile to a target,
**characterised by** the steps of:
(a) representing a scenario of missile (38A9 and target (10A) in virtual reality,
(b) transforming this scenario into slow motion (41 )
(c) simulating the flight of the missile to the target in the slow motion, a human pilot (42) guiding the missile (38A) to the target (10A),
(d) storing the pilot's (42) behaviour and the behaviour of the missile (10A) resulting therefrom for a number of such simulated flights,
(e) re-transforming the data thus stored into real time (48), and
(f) training the guidance unit provided with a neural or fuzzy-neural network (36) by the behaviour of the pilot (42) and of the missile (10A) after retransformation into real time.

2. Method as claimed in claim 1, **characterised in that** prior to the training of the neural or fuzzy-neural network with the behaviour of pilot and missile the following steps are carried out:
(a) computing a solution of the non-linear guidance problem in analytical form (26),
(b) generating of numerical solutions for a number of flights of the missile to its target, and
(c) pre-training the neural network with the computed solutions obtained thereby.

## Revendications

1. Procédé d'entraînement d'un réseau neuronal pour le guidage d'un missile vers une cible, **caractérisé par les étapes de procédé :**
(a) représentation d'un scénario de missile (38A) et de cible (10A) en réalité virtuelle,
(b) transformation de ce scénario au ralenti (41),
(c) simulation du vol du missile vers la cible au ralenti, un pilote humain (42) guidant le missile (38A) vers la cible (10A),
(d) mémorisation (46) du comportement du pilote (42) et du comportement du missile (10A) en résultant pour un nombre de vols simulés de cette espèce,
(e) retransformation des données ainsi mémorisées en temps réel (48) et
(f) entraînement de l'unité de guidage pourvue d'un réseau neuronal ou neuroflou (36) à l'aide du comportement du pilote (42) et du missile (10A) retransformé en temps réel.

2. Procédé selon la revendication 1, **caractérisé en ce que** les étapes de procédé suivantes sont réalisées avant l'entraînement du réseau neuronal ou neuroflou à l'aide du comportement du pilote et du missile :
(a) calcul d'une solution du problème de guidage non linéaire sous forme analytique (26) et
(b) génération de solutions numériques pour un nombre de vols du missile vers sa cible et
(c) entraînement préalable du réseau neuronal à l'aide des solutions obtenues là par calcul.
